# EUROPEAN PATENT APPLICATION

(11) **EP 3 961 654 A1**
(43) Date of publication of application: **02.03.2022**
(21) Application number: 21191956.8
(22) Date of filing: 18.08.2021
(51) Int. Cl.: G21C 17/003

(54) **SURFACE IMPRINTING DEVICE FOR INACCESSIBLE PLACES OF NUCLEAR FACILITIES**

(30) Priority: 25.08.2020 CZ 202037910 U
(71) Applicant: Centrum Vyzkumu Rez S.R.O., 250 68 Husinec-Rez (CZ)
(72) Inventor: Kanta, Jiri, 32100 Plzen (CZ); Matejicek, Jan, 32100 Plzen (CZ)
(74) Representative: Novotny, Jaroslav

(57) **Abstract**

Surface imprinting device for inaccessible places of nuclear facilities consists of three main parts. The outer bell (1), the inner bell (2), and the base (3) with arms. The outer bell (1) is attached to the base with arms (3) with help of the pneumatic actuators (6) for creation of the desired pressure on the test surface. The suction cups (4) which keep the whole device adhered to the test surface are attached to the base (3). The inner bell (2) has the O-ring (9) around its circumference preventing leakage of the replication compound into the space of the outer bell (1), adapting to the relief of the tested surface while the O-ring (9) rests on the test surface. The filter (8) is inserted around the inner bell (2) to capture any replication compound leakage, while the filter is attached by a flange (7). On the inside of the inner bell, a grid for capturing the remaining replication compound is placed, and there are at least two gaps for air escape around the inner bell (2) circumference.

## Description

### Technical Fields

The invention relates to a device for making surface imprints in inaccessible places.

### Background Arts

Man-made imprinting using replicas is commonplace. However, there is no device on the market that can create a replica in places that cannot be entered by a person providing safe imprinting without leakage into the environment. After the replication compound has hardened, the whole replica is strongly adhered to the test surface and it must be safely detached and removed from the water environment.

### Disclosure of Invention

The mentioned shortcomings are eliminated by the surface imprinting device for inaccessible places of nuclear facilities. The invention consists of an outer bell, an inner bell and a base with arms. The outer bell is attached to the base with arms by pneumatic actuators. The pneumatic actuators create the required pressure on the test surface, while the vacuum suction cups attached to the arms of the base hold the whole device attached to the test surface. The inner bell has a sealing O-ring around the circumference that rests on the test surface preventing the leakage of replication compound into the area of the outer bell, adapting to the relief of the test surface. A filter is inserted around the inner bell to capture any replication compound leakage, while the filter is attached by means of a flange. On the inside of the inner bell, there is a grid for capturing the remaining replication compound. There are at least two gaps for air escape around the perimeter of the inner bell.

The whole device consists of two independent units. The first part consists of an outer plastic bell, which contains a flange. The flange helps to keep the internal filter in its fixed shape, thereby preventing the replication compound from mixing with the liquid in the external environment in case of a leakage. On the outside of the bell, three pads are made for mounting three pneumatic actuators, which are needed for detachment of the replica and the whole diagnostic device from the test surface after the replication compound has hardened. In the middle part of the outer bell, in the axis of the bell, there is a hole in which a rubber seal is inserted. A transparent light-carrying tube is led through this hole, which is locked by the seal and by means of which the replication compound is led through the tube directly to the place where the imprint is being made. The inner bell is attached to the outer bell using three screws. There is a hole in its center, which is used for passing through the transparent tube to bring the replication compound. A grid is made on the inside of the inner bell into which the remaining replication compound is collected after filling the space for replica. Once the replica has hardened, the grid helps to keep the shape of the imprint, and creates coherence with the inner bell during detachment of the device from the test surface. Furthermore, several small gaps for air escape are made around the perimeter of the inner bell. The air enters the inner space for replica through the tube as it is pushed in front of the replication compound. Thanks to the air escape gaps, the area is completely filled with replication compound. On the bottom surface of the inner bell, there is a groove for inserting an O-ring around the perimeter. When the bell is pressed against the surface, the O-ring seals it, thus preventing the replication compound from leaking outside the inner bell. Its other feature is its fine adjustment to the surface relief, which can be modified according to the shape of the measured surface.

To keep the whole device in place during the application and subsequent hardening of the replication compound, an oval base was created with three arms, offset from each other by 120°. A precise gap for inserting a pneumatic actuator is made inside each arm. The actuators are used to create the required pressure on the entire system of two bells. At the end of each arm, there is a vacuum suction cup which helps keep the whole diagnostic device attached to the surface. The suction cups work on the principle of vacuum, where the ejector connected to compressed air drains the liquid under the suction cup space, and leads it back out.

The main advantages of the device are:
- attachment to the measured surface
- pushing air bubbles above the measured surface to obtain realistic replicas
- making of the replica
- detachment of the replica from the measured surface and its safe storage in the inner bell
- prevention of leakage of the replication compound into the environment outside the diagnostic device
- maintaining a real shape of a replica for further analysis

The whole device is controlled remotely mechanically, and the user does not come into contact with the radiation environment.

### Brief Description of Drawings

The invention will be further clarified with the help of the drawings.

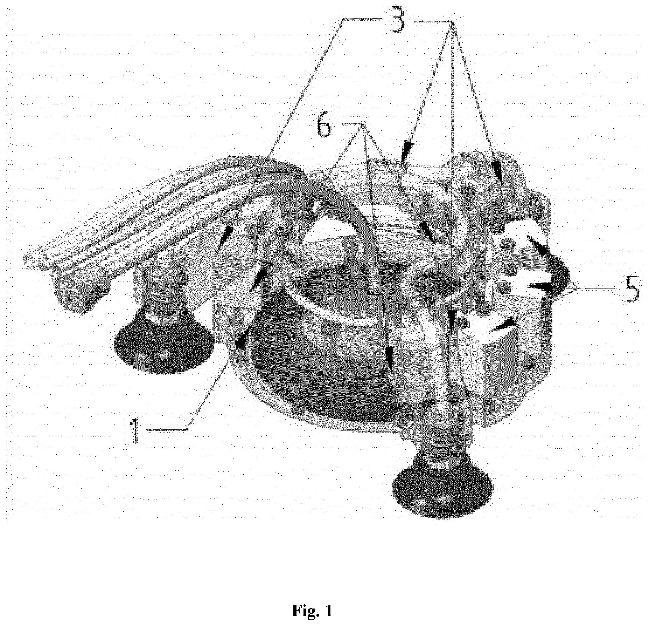

Figure 1 represents a top view of the whole device, showing the outer bell with pneumatic actuators for detachment of the whole device, and the base with holders for tubes leading liquid away from the suction cups (thus creating desired vacuum). The light-carrying tube leading the replication compound goes through the center of the outer bell. Fig.1 also shows the three arms with pneumatic actuators for creating a pressure.

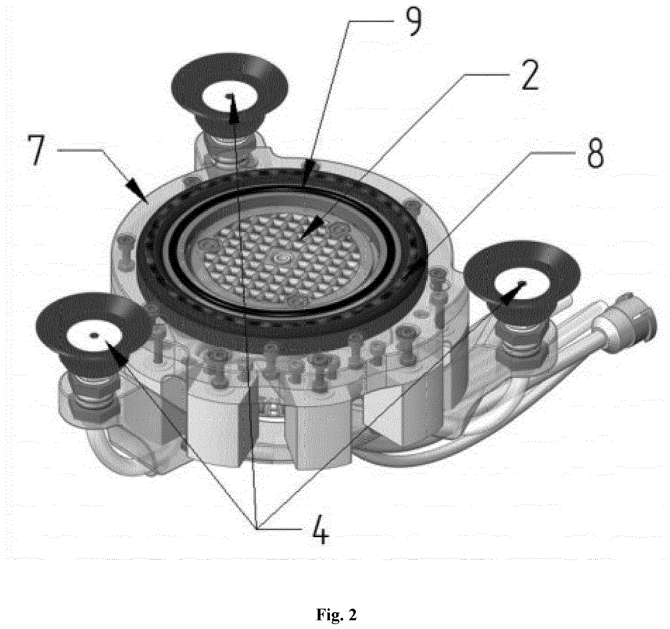

Figure 2 represents an overall bottom view of the device. This view shows the inner bell, where one can see the grid, the holes for leading away excess air, and the rubber seal - the so called O-ring preventing the leakage of the replication compound. Furthermore, a view of the inside of the vacuum suction cups and the flange holding the filter in the desired shape in case of replication compound leakage are shown.

### Made for Carrying out the Invention

Surface imprinting device for inaccessible places of nuclear facilities consists of three main parts. The outer bell 1, the inner bell 2, and the base 3 with arms. The outer bell 1 is attached to the base 3 with help of the pneumatic actuators 6. The pneumatic actuators 6 create desired pressure on the test surface. The suction cups 4, which keep the whole device adhered to the test surface, are attached to the base 3. The inner bell 2 has the O-ring 9 around its circumference preventing leakage of the replication compound into the space of the outer bell 1, adapting to the relief of the test surface at the same time.

Finally, the filter 8 attached by means of the flange 7 can be inserted around the inner bell 2 to capture any replication compound leakage.

On ferromagnetic test surfaces, the vacuum suction cups 4 can be replaced by electromagnets.

Surface imprinting device for inaccessible places of nuclear facilities allows attachment to the measured area, pushing air bubbles above the measured surface to obtain realistic replicas, making a replica, detachment of the replica from the measured surface and its safe storage in the inner bell, prevention of leakage of the replication compound into the environment outside the diagnostic device, and keeping a real shape of a replica for further analysis. On the inside of the inner bell, there is a grid for capturing the remaining replication compound.

### Industrial Application of the Invention

The device according to this invention is intended to be used in nuclear power plants. It will be used in solving non-standard situations in case of formation of unwanted scratches, bruises on the components of the primary circuit. The use of equipment for making replicas will occur in critical situations of the nuclear power plant operator in case of damage to the surface of the components and decisions will be made on the possibility of further operation of the facility or its repair.

### List of reference marks

- 1: - Outer bell
- 2: - Inner bell
- 3: - Base with arms
- 4: - Vacuum suction cups
- 5: - Pneumatic actuators for detaching the whole device
- 6: - Pneumatic actuators for pressure
- 7: - Flange
- 8: - Filter for capturing replication compound leakage
- 9: - Sealing O-ring

## Claims

1. Surface imprinting device for inaccessible places of nuclear facilities is **characterized by** consisting of the outer bell (1), the inner bell (2), the base (3) with arms, while the outer bell (1) is attached to the base (3) with arms, by means of pneumatic actuators (6) for creation of a desired pressure on the test surface, while the suction cups (4) are attached to the arms of the base (3) for keeping the whole device adhered to the test surface, while the inner bell (2) has an O-ring (9) around its circumference preventing the replication compound from leaking into the space of the outer bell (1) and for adapting to the relief of the test surface, while the O-ring (9) rests on the test surface.

2. Surface imprinting device for inaccessible places of nuclear facilities, according to claim 1, is **characterized by** the filter (8) for capturing leakage of the replication compound placed around the inner bell (2) attached with a flange (7).

3. Surface imprinting device for inaccessible places of nuclear facilities, according to claim 1 and 2, is **characterized by** the grid for squeezing in remaining replication compound placed on the inside of the inner bell.

4. Surface imprinting device for inaccessible places of nuclear facilities, according to the preceding claims, is **characterized by** at least two gaps for air escape around the circumference of the inner bell (2)
